# EUROPEAN PATENT APPLICATION

(11) **EP 0 598 159 A1**
(43) Date of publication of application: **25.05.1994**
(21) Application number: 92500152.1
(22) Date of filing: 18.11.1992
(51) Int. Cl.: B29C 67/14

(54) **Procedure for obtaining reinforced composite shapes**

(71) Applicant: De La Puerta Climente, José Enrique, E-28028 Madrid (ES); Manso Garcia, Juan José, E-28028 Madrid (ES)
(72) Inventor: De La Puerta Climente, José Enrique, E-28028 Madrid (ES); Manso Garcia, Juan José, E-28028 Madrid (ES)
(74) Representative: Gomez-Acebo y Pombo, José Miguel

(57) **Abstract**

Procedure for obtaining reinforced composite shapes, with open or closed cross-section, which consists of passing reinforcement fibres (2) impregnated with resin through a shaping die (5), continuous polymerization of the whole and cutting the shape into the predetermined lengths. Made to pass through the die together with the reinforcement fibres (2) are longitudinal reinforcement elements (3) consisting of continuous and flexible high-resistance wires or rods bathed in resin (4), which can consist of steel, carbon or similar wires or rods.

The invention also includes the composite shape based on resins, reinforcement fibres (2) and longitudinal reinforcement elements (3).

## Description

This invention concerns a procedure for obtaining reinforced composite shapes that allows composite shapes to be obtained of any cross-section, both open and closed. The invention is similarly concerned with the shape obtained with that procedure.

The composite shapes are created on the basis of fibre, generally fibreglass, and resins of different kinds.

For obtaining composite shapes by the traditional procedure, the fibres making up the reinforcements are conveyed from the store to a bath where they are impregnated with resin. These reinforcements then enter a die-mould where the configuration of the shape and its polymerization are carried out by the input of heat. The progress of the shape has to be continuous, which can be achieved by using a traction system. When the formed shape reaches the desired length it is subjected to a cutting operation.

The procedure for obtaining shapes described above is known by the name "Pultrusion". This procedure allows composite shapes to be manufactured in a continuous manner, with any cross-section, open or closed, solid or hollow, and even with complex forms and variable cross-sections. As already stated, with this procedure the raw materials are subjected to being pulled and pass through operations such as impregnation with resins, shaping, polymerization, post-curing and final cutting.

The object of this invention is the manufacture of structural shapes of any cross-section, made from a composite mass and provided with longitudinal reinforcement on the basis of wires or rods made of high-resistance steel or other fibres with high resistance and high modulus of elasticity.

To achieve this, in accordance with the invention, continuous steel wires or rods which are bathed in resins and, as with the whole composite, subjected to the necessary polymerization process or processes, are made to pass through the shaping die together with the reinforcement fibres for the shape.

The elastic modulus of these steel wires or rods is very much higher than that of the other components of the shape, which confers greater rigidity on the composite once polymerized.

The hybrid material that is obtained has the following properties, among others:
1) Great lightness, to be precise, approximately 15% of steel shapes with similar resistance characteristics and approximately 7% of those made from reinforced concrete.
2) Great resistance to the action of outside agents, both regarding the weather and industrial agents.
3) Great ease and economy in its transportation and assembly.
4) Great economy, with costs very much less than equivalent steel or concrete shapes.

The application of the shapes obtained with the invention's procedure can be very wide, from their use as posts for the distribution of low tension electricity lines to forming part of reticulated or triangulated structures, supports or lamps for public lighting, radio antennas, etc.

In the traditional procedure for manufacturing composite shapes, the reinforcement is based on different types of fibreglass. By means of the invention's procedure the rigidity of the composite is increased by the use of additional reinforcements consisting of high-resistance wires or rods. These wires or rods will be used in a continuous manner and will be flexible to allow their introduction into the shaping die together with the fibreglass.

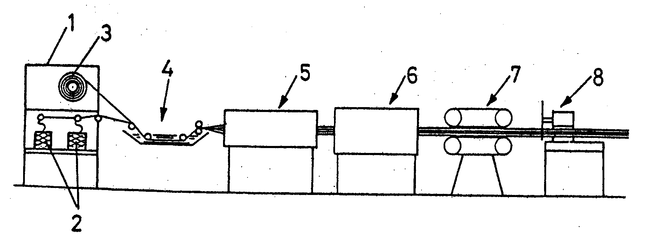

The attached figure shows in a diagrammatic manner an example of carrying out the invention's procedure.

In the diagram, number 1 refers to the store containing the reinforcement elements consisting of traditional fibres 2 and continuous and flexible reinforcement wires or rods 1 with high resistance 3. The fibres 2 and the wires or rods 3 are impregnated with resin in the bath 4, and then enter a die-mould 5 where the configuration of the shape and its polymerization by heat take place. The plant can also include a heating oven 6 which will allow the polymerization or post-curing process to be completed.

The progress of the shape, which has to be continuous, is carried out by means of a traction system 7. When the formed shape reaches the desired length it is cut in a cutting module 8.

## Claims

1. Procedure for obtaining reinforced composite shapes, with open or closed cross-section, made from passing reinforcement fibres (2) impregnated with resin (4) through a shaping die (5), continuous polymerization of the whole and cutting of the formed shape into the desired lengths (8), characterized by the fact that, made to pass through the shaping die (5) together with the reinforcement fibres are longitudinal reinforcement elements consisting of continuous and flexible high-resistance wires or rods (3) bathed in resins (4), whose elastic modulus is very much greater than the other components and confer on the composite, once polymerized, greater rigidity.

2. Procedure according to patent claim 1, characterized by the fact that the longitudinal reinforcement elements consisting of high-resistance wires or rods (3) are made of steel.

3. Procedure according to patent claim 1, characterized by the fact that the longitudinal reinforcement elements consisting of high-resistance wires or rods (3) are made of carbon.

4. Reinforced composite shape, with open or closed cross-section, characterized by the fact that it is made on the basis of resins, reinforcement fibres (2) and longitudinal reinforcement elements (3) embedded in the mass of the shape, whose elements consist of continuous and flexible high-resistance wires or rods.
